# EUROPEAN PATENT SPECIFICATION

(11) **EP 0 296 233 B1**
(45) Date of publication and mention of the grant of the patent: **06.07.1994**
(21) Application number: 88901142.5
(22) Date of filing: 12.01.1988
(51) Int. Cl.: D21H 13/40, D21H 27/12, D21J 1/20

(54) **LOW DENSITY FROTHED MINERAL WOOL PANEL AND METHOD**
PANEEL NIEDRIGER DICHTE AUS GESCHÄUMTER MINERALWOLLE UND VERFAHREN
PANNEAU DE MOUSSE DE LAINE MINERALE DE FAIBLE DENSITE ET PROCEDE DE FABRICATION

(30) Priority: 12.01.1987 US 2495
(43) Date of publication of application: 28.12.1988
(73) Proprietor: USG INTERIORS, Inc., Chicago, Illinois 60606-4385 (US)
(72) Inventor: IZARD, David, Graham, Wauconda, IL 60084 (US)
(74) Representative: Johnson, Terence Leslie
(86) International application number: US8800170
(87) International publication number: WO8805098

(56) References cited:
- WO-A-84/03112
- WO-A-88/05100
- Perry's Chemical Engineers' Handbook, Sixth Edition, McGraw Hill, 1984.

## Description

This invention relates to mineral wool fibrous products. More particularly, it relates to a method for manufacturing strong, structural panels of mineral fiber that are very lightweight, about 3-10 pounds per cubic foot (50-160 kg/m³) density, and which may be used as acoustical ceiling tiles, thermal insulating panels, sound absorbing panels, pipe and beam insulation and the like products.

The water felting of dilute aqueous dispersions of mineral wool and lightweight aggregate is known. By such methods, a dilute dispersion of mineral wool, lightweight aggregate, binder and other adjuvants are flowed onto a moving foraminous support wire screen for dewatering, such as that of an Oliver or Fourdrinier mat forming machine, at line speeds of about 10-50 feet per minute (.05-.3 m/s). The dispersion dewaters to form a mat first by gravity means and then by vacuum suction means. The wet mat is dried over a number of hours in heated convection drying ovens; and the product is cut and optionally top coated, such as with paint, to produce lightweight structural panels such as acoustical ceiling products. Such methods cannot produce low density structural panel products below about 12 pounds per cubic foot (190 kg/m³) density. A "structural" panel product, by definition, is capable of supporting its own weight without visible sagging, bending or collapsing when supported only at the edges of the panel, as in a suspended ceiling grid.

It is also known to form stable foams with mineral wool. US-A-4,447,560 suggests a low density insulation sheet may be made by forming a first slurry of fiber containing synthetic rubber latex solids. A detergent slurry is then formed and the two slurries admixed to about 15% solids consistency, agitated to a stable foam, and oven dried. The extremely time consuming, and energy intensive, drying of the stable foam from 15% solids is a severe economic detriment.

It has been suggested that lightweight foams of attenuated glass fibers might be formed into extremely lightweight pipe wrap of about 1-3 pounds per cubic foot (20-50 kg/m³) density in US-A-3,228,825. According to this patent, microscopic bubbles are generated and, in order to achieve uniform incorporation of lightweight aggregate and attenuated glass fiber mixtures with the bubbles, a "binder fiber" glue of extremely fine sized and very highly refined cellulosic fibrilles is required. The proposed product would appear to be an extremely flexible one incapable of structural panel uses. Further it is believed that this proposed process has never been commercialized or found to be of practical interest.

Furthermore it is known that paper webs constituted mainly by noble cellulose fibers and fibrilles may be formed from foams. The basic formation of the cellulose fiber for manufacture of paper gives rise to highly fractured fiber fragments and fibrilles having jagged and fuzzy microstructured surfaces of cellulose fibers.

It is an object and advantage of the present invention to provide low density structural mineral fiber panels without having to dry extremely high amounts of water out of the wet mat over long periods of time.

According to the invention there is provided a method for manufacturing a low density structural mineral fiber panel on a moving foraminous support wire which comprises:
A. forming a frothable dilute aqueous mineral fiber slurry comprising mineral fibres, inorganic lightweight aggregate, and a frothing agent;
B. mixing the furnish with air to form a non-stable froth of fragile, non resilient, non-uniform bubbles.
C. depositing the bubble mass upon a scrim cover sheet above the foraminous wire for dewatering;
D. subsequently collapsing the bubbles to a wet open, porous structural mass of entangled fibers having water in the interstitial spaces of the entangled fiber mass; and
E. stripping water from the wet mass and drying the wet mass without substantial collapse of the open entangled structure by applying vacuum pressure differential and simultaneously passing heated dry air through the open entangled structure.

Using the invention it is possible to provide low density structural mineral fiber panel products which have excellent strength and integrity at densities less than about 10 pounds per cubic foot (160 kg/m³).

Also, utilization of the invention provides a method for manufacturing low density mineral panels wherein the dewatering and drying of the wet mat may be accomplished in a facile, rapid manner such that the mat is dewatered and dried in a few minutes.

A method embodying the invention is based upon the peculiar rheology of delicate, aqueous froth of unstable and weak bubbles, and further upon high volume, high velocity through-air drying of wet, open porous structures. Basically, in accordance with the present invention, the applicant has now discovered a process for rapidly forming shaped structural panel products such as acoustical ceiling tile and the like structural panel products that combine very low densities with good strengths. A modified wet process is employed wherein a dilute aqueous slurry may be foamed to delicate froth between scrim cover sheets on a moving foraminous support wire screen. The froth dewaters and matures under quiescent conditions and is then rapidly ruptured by brief pulses of high vacuum to form a sufficiently stable porous structure that may be rapidly stripped of remaining water and dried by passing large volumes of dry heated air through the structure without any substantial collapsing of the open porous structure.

FIGURE 1 is a schematic diagram of a frothed mineral panel manufacturing process line in accordance with the present invention.

FIGURE 2 is a top view cross section of a portion of the process line particularly showing the frothing head forming box apparatus of Figure 1.

FIGURE 3 is a side view cross section of the same portion of the process line with the forming box apparatus broken away to show the internal walls.

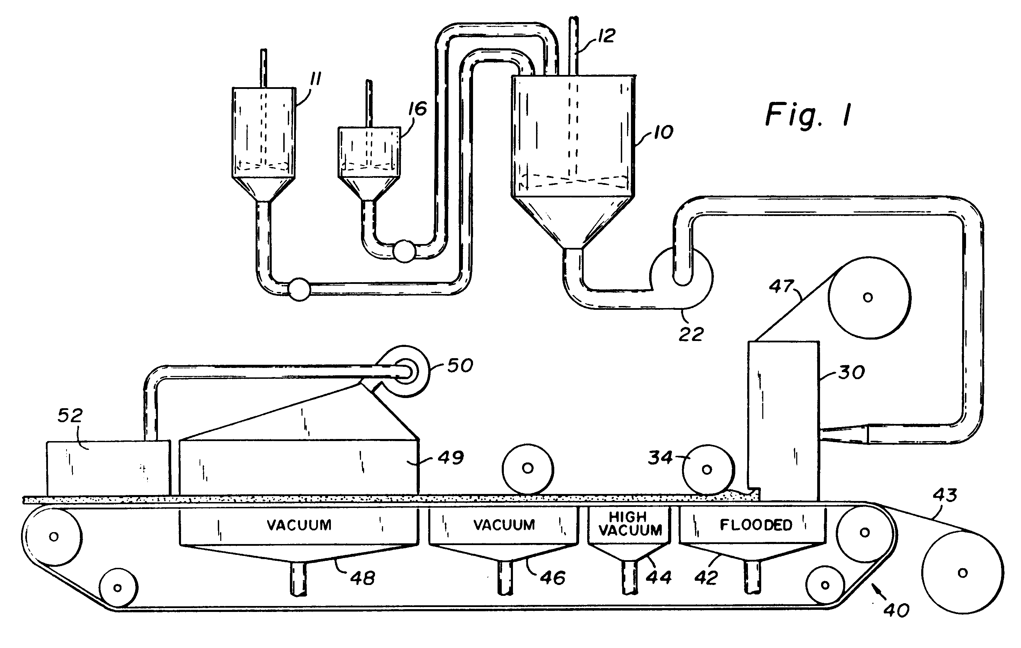

Basically, referring to FIGURE 1, a weak or delicate, nonresilient and nonviscous, and therefore unstable mass of irregular sized bubbles is generated in a mineral fiber slurry in main mix tank 10. This is in contrast to forming a stable foam wherein bubble size is very small or microscopic and is generally very uniform, with each bubble behaving as a stable, rigid sphere when subjected to stresses. In a stable foam, the resilient, stable spheres exhibit a great degree of permanence, or resistance to deformation, and show a high viscosity, or resistance to dewatering, of the liquid film of the bubble wall when acted upon by even large stress forces. In contrast thereto the process of the present invention generates rather unstable, transitory bubbles with a foaming aid such as polyvinyl alcohol. The froth as formed has active binder and foaming aid constituents forming a large part of the solids in the liquid portion of the bubble walls. The liquid of the froth bubble walls and coating the entangled solids of fiber and aggregate has a solids consistency which increases from that of the initial dispersion as the froth dewaters, matures and dries out to exhaustion. More particularly, the bubbles rapidly dewater, concentrating the solids in the liquid that forms the film or wall of the bubble and in the liquids-solids interface with the fiber, aggregate and cover sheet, as the bubbles age and mature under generally quiescent conditions in first flooded sections 42 of the foraminous wire 40. The froth dewaters to a point where the solids in the liquid making up the walls of the bubbles and at the liquids-solid interface have increased from about 3 weight % to about 6-10 weight % consistency. It is believed that at this point the foaming aid, if any, and binder constituents have become sufficiently concentrated with lessened water per unit volume at the liquids-solids interface and with the fiber and aggregate sufficiently entangled and coated by binder as to retain the open, porous structural configuration upon the drying out and collapsing of the bubbles.

Thereafter the bubbles are collapsed and the wet mass further stripped of remaining water in the interstitial spaces of entangled fiber by firstly brief bursts of high vacuum, equivalent to providing a pressure differential equivalent to a range of 5-20 inches of mercury (16885-67540 Pa) in sections 44. This bursts the bubble walls and the further draining liquid coats the contact points on the highly voided entangled mass of fiber, aggregate and scrim. This provides further structural integrity to the wet panel. Thereafter, water stripping and drying are enabled via continued vacuum in sections 46 and 48 with passing high volumes of high velocity dry heated air through the mass without substantial collapse of the open, highly voided sections 48, 49 and 52. Thereby structural mineral panels having a density in the range 3-10, (50-60 kg/m³), with a modulus of rupture in the range 60-120 pounds per square inch (410-830 kPa) measured with nonwoven fiber glass scrim cover sheets in place are obtained.

The products made according to the method of the present invention are predominately mineral fibrous products. The mineral fiber for use in the present invention may be any of the conventional fibers prepared by attenuating a molten stream of basalt, slag, granite or other vitreous mineral constituent. The molten mineral is either drawn linearly through orifices, commonly referred to as textile fibers, or it is recovered tangentially off the face of a spinning cup or rotor, commonly referred to as wool fibers. Ceramic fibers and organic fibers such as polyamide fibers, acrylic fibers, polyester fibers, polyolefin fibers, cellulose fibers and the like may also be used. Porous bonded mats or batts of fibers may be used as well as individual fibers to form the low density panel products. Expressed in terms of the dry solids content of the final panel product, the fiber constituent is suitably present in an amount in the range 10-95% by weight, and preferably in the range 30-40%.

Another essential ingredient is an inorganic lightweight aggregate of exfoliated or expanded volcanic glass origin. Such aggregate includes the well expanded perlite, exfoliated vermiculite, exfoliated clays and the like products which are available in a variety of mesh sizes. Generally mesh sizes less than 8 mesh (2.38 mm or less) are suitable, although this is not critical. Generally expanded perlite is preferred for reasons of availability and economy. The amount of lightweight aggregate included may vary from about 20% to about 70% on a dry weight basis in the final product. It is particularly preferred to use expanded perlite having particle sizes from about 12 (1.41 mm or less) to about 100 mesh (0.149 mm or less) in amounts of about 30-40% for very lightweight structural panels of the invention. The lightweight aggregate is quite friable and some of it will be shattered by the mixing herein contemplated. The panel being formed is provided with a bottom cover sheet, and some of the shards of aggregate and any separated fiber shot will collect on the bottom cover sheet.

It is also preferred that the composition include 3-25% by weight coarse cellulose fibers to aid flotation and entanglement. Such fibers generally are about 1/16-1/4 inch (0.16-0.64cm) in length with some fibers being up to about an inch (2.54cm). These are conveniently provided by slushing newspaper or other papers in a "Slush Maker". That is, suitable coarse cellulose fibers may be made by charging about 10-20 pounds (5-9 kg) of newspapers or other paper stock for every 100 gallons (0.4 m³) of water in a high intensity, high shear mixer and agitating the mixer for a couple of minutes as in mix tank 11. About 3-5 weight % usage level is preferred for increasingly stiff products while maintaining good ease of cutting and obtaining panels with sharply defined, non-jagged edges. This amount also aids in retaining binder in the solids collected on the wire screen. As the amount decreases, the amount of binder retained in panel formation decreases and strength of the panel decreases. At 5% usage level, about half of the latex resin binder is retained in panel formation. Of course, somewhat more or less may be used, generally in amounts up to 25%, without further apparent substantial advantage. Substantially higher amounts lead to difficulties in cleanly cutting the panels.

Ordinarily the foregoing fiber ingredients and lightweight aggregate together constitute about two-thirds of the total solids of the final panel product. Preferably, the mineral fiber and the aggregate are included in roughly equal amounts.

Any binder, by itself or in combination with a foaming aid, that will generate rather unstable, transitory, delicate and nonresilient bubbles upon high energy mixing may be used. Cooked starch binders or resin latex binders that are homopolymers or copolymers containing acrylic, acetate, styrene-butadiene and the like monomers that provide the requisite bubbles may be used for example. A preferred combination of binder and foaming aid is polyvinyl acetate with polyvinyl alcohol foaming aid. It is particularly preferred to employ a polyvinyl alcohol foaming aid. It is particularly preferred to employ a polyvinyl alcohol that is partially hydrolyzed for foaming the mineral wool and lightweight aggregate slurry to a delicate nonresilient froth. Thus polyvinyl alcohols which are from about 87% to about 91% hydrolyzed (that is, in which there is about 9% to about 13% residual polyvinyl acetate) and have molecular weights from about 22,000 to about 110,000 appear to be the most effective with polyvinyl acetate binder. Polyvinyl alcohols that are hydrolyzed from about 75% up to about 95% may be used but are not as effective as those within the preferred range.

The amount of binder or binder and foaming aid is quite variable. Generally about half to three-quarters of the amounts initially added will pass through the wire in the drainage white water. Recycling draining water to the main mixer for dilution slurry formation will keep binder and foaming aid usage at a minimum since only make-up additions for the amounts retained in the panel will be required. The polyvinyl acetate is present in the panel in an amount of about 5-30% by weight, preferably about 10-15% by weight. Preferred polyvinyl acetates are commercially available as the VINAC or AIRFLEX resins from Air Products Company, X-LINK or RESYN resins from National Starch and Chemicals Corporation, or CASCOREZ resins from Borden Chemical Division of Borden, Inc.

Generally the polyvinyl alcohol will be solubilized to appropriate concentration levels of about 0.1% to about 5% of total solids in a separate vessel for use in the present process such as in mix tank 16, and amounts will be used as to provide about .1-10% retained in the panel.

Other frothing aids, and binders that exhibit weakly foaming characteristics may be used in the present process.

Generally the mat will be formed upon and become an integral part of the final panel product with one or more cover sheets. Such may be of paper, woven glass fiber, non-woven glass fiber and the like. A particularly preferred cover sheet is a nonwoven glass fiber scrim, such as battery type scrim, having a weight of about 0.4-2.5 pounds per hundred square feet (0.02-0.12 kg/m²).

The following specific examples will further illustrate various specific embodiments of the present invention. Unless specified to the contrary, all amounts are expressed as parts by weight on a total dry solids weight basis. Of course, it is to be understood that these examples are by way of illustration only and are not to be construed as limitations on the present invention.

### EXAMPLE 1

In a first evaluation, mineral wool having about 30% by weight loose and adhered shot contact was mixed with a solution of 0.01% partially hydrolyzed medium viscosity polyvinyl alcohol (VINOL 523). This level did not produce a stable foam but was sufficient to create a frothing type foaming of delicate, nonresilient, nonviscous and nonuniform sized bubbles. By circulating the slurry through a centrifugal pump with air injection at the exhaust, the mineral wool was selectively entangled in the bubbles. When agitation was stopped, the fiber floated to the surface exhibiting an about 800% increase in volume of entangled fiber compared to the mass of wool before mixing. No visible shot was observed in the frothed fiber, which was dried to achieve an approximately 500% increase in fiber volume.

In a second evaluation, a 3 wt.% solution of the same polyvinyl alcohol was added to a 3% solids dispersion of 33% mineral wool, 33% expanded perlite, felted mineral wool furnish. After standard mixing, the furnish was subjected to 30 seconds high shear mixing, which pulled a vortex into the mixer blade and developed a froth with the fiber, leaving 80% of the water as a separate phase with a significantly quantity of shot at the bottom.

### EXAMPLE 2

A series of evaluations were conducted with a standard mineral wool furnish for conventional dilute water interfelting and various amounts of polyvinyl alcohol (VINOL 540S). Drainage time increased geometrically with increasing amounts of polyvinyl alcohol. Substituting polyvinyl acetate for the binder, passing the furnish through 30 seconds of high shear mixing to develop bubbles and allowing the froth to age, mature and partially dewater by gravity before drainage resulted in much lower linear rather than geometric drainage time increases over ranges of 1-6% polyvinyl alcohol and total solids ranges of 3-10%.

### EXAMPLE 3

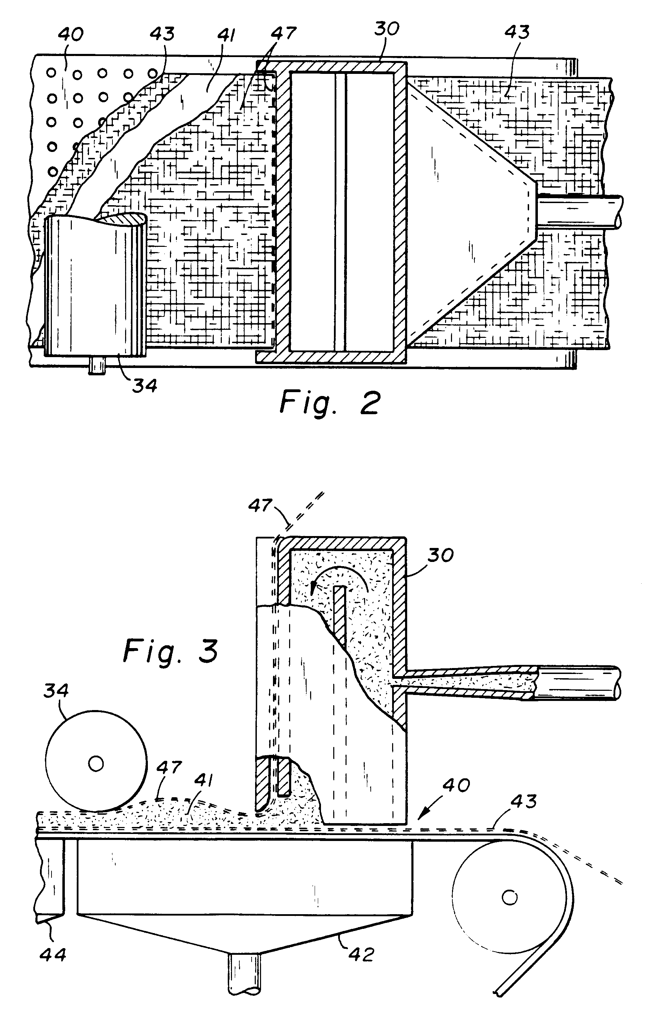

Old newspaper stock was fed to water in mix tank 11 and "slushed" by high speed impeller mixing to form an about 5% dispersion of coarse paper fiber that was then fed to main mix tank 10. A solution of 95% hydrolyzed polyvinyl alcohol (VINOL 540S) was diluted in mix tank 16 and also fed to main mix tank 10. In addition, mineral wool, expanded perlite, starch and polyvinyl acetate were added to main mix tank 10 and diluted with water to form an about 3-6% solids dispersion proportioned to 33% expanded perlite, 33% mineral wool, 15-19% coarse paper fiber, 0-11% cooked corn starch, 0-14% polyvinyl acetate and 3% polyvinyl alcohol. After 30 seconds high shear, high speed mixing with impeller 12, which pulled a vortex of air into the area of the impeller, the dispersion was passed by pump 22 to modified head box 30 above a conventional moving foraminous wire screen of a mat forming machine, hereinafter wire 40. The modified head box 30 functioned to allow the developing froth of bubbles to consolidate the solids in the frothing mass and to further entangle the developing froth with the solids of the dispersion. The convoluting channelization through box 30, shown more particularly in FIGURES 2 and 3, enhanced the maturing and aging of the bubbles as they self-dewatered and consolidated solids, with excess water from the dewatering bubbles draining out controlled drainage sections 42. About half-way through the head box 30 the foaming mass is about 25% air by volume and the liquid is about 5% solids.

A continuous scrim bottom cover sheet 43, such as of nonwoven battery scrim having a weight of about 0.8-2 pounds per 100 square feet (0.04-0.1 kg/m²) of scrim, was applied above wire 40 before the frothing mass 41 cascaded out of box 30 onto wire 40. A similar top cover sheet 47 was fed through box 30. Feeding the top cover sheet 43 through box 30 and under smoothing roll 34 provided an intimate contact with the frothing mass 41 and assisted in smoothing out the surfaces of the panel core frothing mass 41.

The frothing mass 41 was deposited above the wire at flooded sections 42, wherein the foam begins to age and degrade. At the end of this section the foam or froth is about 50% air by volume and about 10% solids in the walls of the bubbles before being hit with the shock of the first vacuum sections 44. At this point the froth disappears. It has been found that brief 0.5-2.0 second pulses of about 5-20 inches of mercury (16885-67540 Pa) vacuum more rapidly and thoroughly collapse the bubbles without any substantial collapse of the open porous structured wet mass than would lower vacuum draw for longer intervals. After rapid pulse high vacuum shock the mass 41 is about 25% solids with the remainder being water in an open porous structure. Underflow water was continuously withdrawn from flooded sections 42 and high vacuum sections 44 and pumped to a white water holding tank (not shown) for a periodic recycling to main mix tank 10.

After high vacuum dewatering of the wet panel, comprising bottom sheet 43, top sheet 47 and a core of open, porous entanglement of fiber, aggregate and binder 41, was still about 75% by weight moisture. Because of the open, porous nature, that water was readily stripped off and the panel dried by rapidly passing large volumes of heated dry air through the panel first in the hooded low vacuum zone 46 and secondly in the drier 48. Conventional convection drying would require at least three hours to remove this moisture. A lessened pressure differential equivalent to about 5-70 (1245-17430 Pa), and preferably about 5-15 inches (1245-3735 Pa) of water was maintained across the surface mass 41 in vacuum sections 46 and 48. In sections 48 the vacuum pressure differential was augmented with very slight positive pressure (about 1 inch (249 Pa) or less of water) dry air flow through enclosure 49 from blower 50 to aid continued stripping of water and to dry the wet mass 41. The blower was operated to provide air through mass 41 at a volume-velocity of about 50-350 (0.02-0.2 m³/s), and preferably about 300 cubic feet per minute (0.1 m³/s) of air per one square foot (0.09 m²) of mat surface with the air provided at a temperature of about 37-180°C, preferably about 175°C. The time for a segment of core mass 41 to be stripped of water and dried from 25% solids varied considerably, depending upon primarily core thickness from about 1/8th inch (.003m) through 2 inch (0.05m) thicknesses. Generally an about 1/2 inch (0.01m) thick panel was stripped and dried to less than 1% moisture in about 2 minutes, with about 3/4th of that moisture being removed in the first 30 seconds due to the enhanced stripping and drying resulting from the high volume, high velocity heated air flow through the open porous structure. Additional optional drying may be provided as by drier 52, which also further may be located over section 46. The resultant panels showed an open, porous core exhibiting a large number of voids of high variable and nonuniform, irregular-shaped, sizes ranging from about 1/64th inch (0.0004m) to about 5/16th (0.008m) inch sizes in a typical nomimal half-inch panel. Representative panels had a density from 3 to 6 pounds per cubic foot (50-100 kg/m³) and exhibited modulus of rupture values of 60 to 120 pounds per square inch (410-830 kPa). Analysis of the panel and of the drainage white water from the flooded section and the various vacuum sections showed about 40-80% of the polyvinyl alcohol and polyvinyl acetate passing into the white water, depending primarily upon the solubilities of the particular alcohols used, the amount of coarse paper fiber, and the temperature of processing. Adding the white water back to main mix tank 10 maintained a low level of binder and frothing aid additions in continuous operation of the process. Exemplary panel formations all had about 5 pounds per cubic foot (80 kg/m³) density, modulus of rupture of about 60 psi (410 kPa), noise reduction coefficients of greater than 0.75 and panel thicknesses of 0.24-2 inches (0.006-0.05m) were:

| Component | | Percent | | | |
|---|---|---|---|---|---|
| | | Sample 1 | 2 | 3 | 4 |
| Mineral Wool | | 30% | 32% | 34% | 36% |
| Perlite | | 30 | 32 | 34 | 36 |
| Coarse Paper fiber | | 15 | 16 | 18 | 19 |
| Corn starch | | 10 | - | 11 | - |
| Polyvinyl acetate | | - | - | 5 | 6 |
| Polyvinyl alcohol | | 1 | 1 | 1 | 1 |
| B-10 battery scrim | | 14 | 2 | 14 | 2 |

| Property | | | | | |
|---|---|---|---|---|---|
| Weight | (lb./ft.²) | 0.1 | 1.0 | 0.1 | 1.0 |
| | (Kg/m²) | (0.5) | (4.9) | (015) | (419) |
| Thickness, | inches | 0.24 | 2.0 | 0.24 | 2.0 |
| | (m) | (0.006) | (0.05) | (0.006) | (0.05) |
| Modulus of Rupture | (psi) | 60 | 120 | 60 | 120 |
| | (kPa) | (410) | (830) | (410) | (830) |

## Claims

1. A method for manufacturing a low density structural mineral fiber panel on a moving foraminous support wire which comprises:
A. forming a frothable dilute aqueous mineral fiber slurry comprising mineral fibres, inorganic lightweight aggregate, and a frothing agent;
B. mixing the furnish with air to form a non-stable froth of fragile, non resilient, non-uniform bubbles.
C. depositing the bubble mass upon a scrim cover sheet above the foraminous wire for dewatering;
D. subsequently collapsing the bubbles to a wet open, porous structural mass of entangled fibers having water in the interstitial spaces of the entangled fiber mass; and
E. stripping water from the wet mass and drying the wet mass without substantial collapse of the open entangled structure by applying vacuum pressure differential and simultaneously passing heated dry air through the open entangled structure.

2. A method according to Claim 1, in which, in Step C, the bubble mass is deposited upon the cover sheet in a first flooded section of the foraminous wire, whereby the mass rapidly dewaters by gravitational pull.

3. A method according to Claim 1 or Claim 2 in which, in step D, a vacuum pressure differential equivalent to 5-20 inches of mercury (16885-67540 Pa) is applied to the bubble mass.

4. A method according to Claim 3, in which brief pulses of vacuum pressure are applied to the mass.

5. A method according to any preceding claim, in which, in Step E, a vacuum pressure differential equivalent to 5-70 inches of water (1245-17430 Pa) is applied to the wet mass.

6. A method according to any preceding claim, in which, in step E, heated dry air is passed through the mass at a rate of 50-350 cubic feet per minute (0.02-0.2m³/s) of air per square foot (0.09m²) of mass surface.

7. A method according to any preceding claim, in which the frothing agent is a polyvinyl alcohol.

8. A method according to Claim 7, in which there is 2-4% of polyvinyl alcohol.

9. A method according to Claim 7 or Claim 8, in which the furnish includes 18% of polyvinyl acetate and 4% of polyvinyl alcohol.

10. A method according to any of Claims 7 to 9, in which the furnish includes 30-40% mineral wool, 30-40% expanded perlite, 4-25% coarse cellulosic fiber, 18% polyvinyl acetate and 2-4% polyvinyl alcohol.

11. A method according to any preceding claim, in which a second scrim cover sheet is deposited above the froth bubble mass in step C.

12. A low density structural mineral fiber panel having an open, porous structure, a density between 3 and 10 pounds per cubic foot (50-160 kg/m³) and a modulus of rupture of at least 60 pounds per square inch (410 kPa) with one scrim cover sheet and an open, porous structure core containing a major amount of mineral fiber, lightweight aggregate, binder and 0.2-5% frothing agent and a large number of irregular sized and shaped interstices.

## Patentansprüche

1. Verfahren zur Herstellung einer Mineralfaser-Bauplatte niedriger Dichte auf einem sich bewegenden mit Löchern durchsetzten Stützdraht, das folgendes umfaßt:
A. Bildung einer schäumbaren verdünnten wäßrigen Mineralfaseraufschlämmung, die Mineralfasern, anorganischen Leichtzuschlag und ein Schaummittel umfaßt;
B. Mischen des Eintrags mit Luft zur Bildung eines nicht stabilen Schaums aus fragilen, nicht elastischen, ungleichförmigen Blasen.
C. Ablagerung der Blasenmasse auf ein Mull-Abdeckgelege über dem mit Löchern durchsetzten Draht zum Entwässern;
D. anschließend Kollabieren der Blasen zu einer nassen, offenen, porösen Strukturmasse verknäulter Fasern mit Wasser in den Zwischenräumen der verknäulten Fasermasse; und
E. Abstreifen von Wasser aus der nassen Masse und Trocknen der nassen Masse ohne wesentliches Kollabieren der offenen verknäulten Struktur durch Applikation eines Vakuum-Druckdifferentials und gleichzeitiges Durchleiten von trockener Heißluft durch die offene verknäulte Struktur.

2. Verfahren nach Anspruch 1, bei dem in Schritt C die Blasenmasse auf dem Abdeckgelege in einem ersten überfluteten Teil des mit Löchern durchsetzten Drahtes abgelagert wird, wobei sich die Masse durch die Schwerkraft schnell entwässert.

3. Verfahren nach Anspruch 1 oder 2, bei dem in Schritt D ein Vakuum-Druckdifferential auf die Blasenmasse aufgebracht wird, das 5 - 20 Inches Quecksilber (16885-67540 Pa) entspricht.

4. Verfahren nach Anspruch 3, bei dem kurze Vakuum-Druckstöße auf die Masse aufgebracht werden.

5. Verfahren nach einem der vorangegangenen Ansprüche, bei dem in Schritt E ein Vakuum-Druckdifferential auf die nasse Masse aufgebracht wird, das 5 - 70 Inches Wasser (1245 - 17430 Pa) entspricht.

6. Verfahren nach einem der vorangegangenen Ansprüche, bei dem in Schritt E trockene Heißluft bei einer Rate von 50 - 350 Kubikfuß pro Minute (0,02 - 0,2 m³/s) Luft pro Quadratfuß (0,09 m²) der Massenoberfläche durch die Masse geleitet wird.

7. Verfahren nach einem der vorangegangenen Ansprüche, bei dem das Schaummittel ein Polyvinylalkohol ist.

8. Verfahren nach Anspruch 7, bei dem 2 - 4% Polyvinylalkohol vorliegen.

9. Verfahren nach Anspruch 7 oder 8, bei dem der Eintrag 18% Polyvinylacetat und 4% Polyvinylalkohol enthält.

10. Verfahren nach einem der Ansprüche 7 bis 9, bei dem der Eintrag 30 - 40% Mineralwolle, 30 - 40% expandiertes Perlit, 4 - 25% grobe Zellulosefasern, 18% Polyvinylacetat und 2 - 4% Polyvinylalkohol enthält.

11. Verfahren nach einem der vorangegangenen Ansprüche, bei dem ein zweites Mull-Abdeckgelege über die Schaumblasenmasse in Schritt C gelegt wird.

12. Mineralfaser-Bauplatte niedriger Dichte mit einer offenen porösen Struktur, einer Dichte zwischen 3 und 10 Pfund pro Kubikfuß (50 - 160 kg/m³) und einem Bruchmodul von mindestens 60 Pfund pro Quadratinch (410 kPa), mit einem Mull-Abdeckgelege und einem offenen porösen Strukturkern, der eine größere Menge an Mineralfasern, Leichtzuschlag, Bindemittel und 0,2 - 5% Schaummittel sowie eine große Zahl von Zwischenräumen unregelmäßiger Größe und Form enthält.

## Revendications

1. Procédé pour fabriquer un panneau de construction basse densité en fibres minérales sur une toile sans fin mobile percée d'ouvertures, faisant office de support, qui comprend le fait de :
A. former une bouillie aqueuse diluée de fibres minérales apte à être transformée en mousse, comprenant des fibres minérales, un agrégat léger inorganique et un agent moussant;
B. mélanger la composition avec de l'air pour former une mousse instable de bulles fragiles, non résilientes et non uniformes;
C. déposer la masse de bulles sur une feuille de recouvrement en mousseline par-dessus la toile sans fin percée d'ouvertures à des fins d'égouttage;
D. par la suite, aplatir les bulles pour obtenir une masse ouverte humide à structure poreuse de fibres emmêlées présentant de l'eau dans les espaces interstitiels de la masse de fibres emmêlées; et
E. éliminer l'eau de la masse humide et sécher la masse humide sans aplatir sensiblement la structure emmêlée ouverte en appliquant un différentiel de pression de vide et en faisant simultanément passer de l'air sec chauffé à travers la structure emmêlée ouverte.

2. Procédé selon la revendication 1, dans lequel, à l'étape C, on dépose la masse de bulles sur la feuille de recouvrement dans une première section noyée de la toile percée d'ouvertures, grâce à quoi la masse s'égoutte rapidement à l'intervention de la traction gravitationnelle.

3. Procédé selon la revendication 1 ou 2, dans lequel, à l'étape D, on applique un différentiel de pression de vide équivalant à 5-20 pouces de mercure (16885-67540 Pa) sur la masse de bulles.

4. Procédé selon la revendication 3, dans lequel on applique de brèves impulsions de pression de vide sur la masse.

5. Procédé selon une revendication précédente quelconque, dans lequel, à l'étape E, on applique un différentiel de pression de vide équivalant à 5-70 pouces d'eau (1245-17430 Pa) sur la masse humide.

6. Procédé selon une revendication précédente quelconque, dans lequel, à l'étape E, on fait passer de l'air sec chauffé à travers la masse à un débit de 50-350 pieds cubiques par minute (0,02-0,2 m³/s) d'air par pied carré (0,09 m²) de surface de la masse.

7. Procédé selon une revendication précédente quelconque, dans lequel l'agent moussant est l'alcool polyvinylique.

8. Procédé selon la revendication 7, dans lequel 2-4% d'alcool polyvinylique sont présents.

9. Procédé selon la revendication 7 ou 8, dans lequel la composition comporte 18% d'acétate de polyvinyle et 4% d'alcool polyvinylique.

10. Procédé selon l'une quelconque des revendications 7 à 9, dans lequel la composition englobe 30-40% de laine minérale, 30-40% de perlite expansée, 4-25% de fibre cellulosique grossière, 18% d'acétate de polyvinyle et 2-4% d'alcool polyvinylique.

11. Procédé selon une revendication précédente quelconque, dans lequel on dépose une seconde feuille de recouvrement en mousseline au-dessus de la masse de bulles en forme de mousse à l'étape C.

12. Panneau de construction basse densité en fibres minérales possédant une structure poreuse ouverte, une densité entre 3 et 10 livres par pied cubique (50-160 kg/m³) et un module de rupture d'au moins 60 livres par pouce carré (410 kPa), une feuille de recouvrement en mousseline, ainsi qu'une partie centrale ouverte à structure poreuse contenant une quantité majeure de fibres minérales, un agrégat léger, un liant et de 0,2 à 5% d'un agent moussant, ainsi qu'un grand nombre d'interstices de dimension et de forme irrégulières.
